# EUROPÄISCHE PATENTSCHRIFT

(11) **EP 3 590 779 B1**
(45) Veröffentlichungstag und Bekanntmachung des Hinweises auf die Patenterteilung: **10.03.2021**
(21) Anmeldenummer: 19191070.2
(22) Anmeldetag: 27.10.2016
(51) Int. Cl.: B60T 17/00, F15B 21/04, F04B 49/02, F04B 49/06

(54) **DRUCKLUFTAUFBEREITUNGSEINRICHTUNG UND VERFAHREN ZUM BETREIBEN EINER SOLCHEN**
COMPRESSED AIR PROCESSING DEVICE AND METHOD FOR OPERATING THE SAME
DISPOSITIF DE TRAITEMENT DE L'AIR COMPRIMÉ ET SON PROCÉDÉ DE FONCTIONNEMENT

(30) Priorität: 02.11.2015 DE 102015118744
(43) Veröffentlichungstag der Anmeldung: 08.01.2020
(62) Teilanmeldung aus: 16791551.1
(73) Patentinhaber: KNORR-BREMSE Systeme für Schienenfahrzeuge GmbH, 80809 München (DE)
(72) Erfinder: RIEDI, Angelika, 81543 München (DE); GEHRKE, Philipp, 80805 München (DE); URRA, Christian, 80371 München (DE); MERKEL, Thomas, 50354 Hürth (DE)
(74) Vertreter: Prüfer & Partner mbB Patentanwälte · Rechtsanwälte

(56) Entgegenhaltungen:
- EP-A2- 2 829 744
- DE-A1-102010 054 063
- US-A1- 2014 237 962

## Beschreibung

Die vorliegende Erfindung betrifft eine Druckluftaufbereitungseinrichtung, insbesondere eine Druckluftaufbereitungseinrichtung für Schienenfahrzeuge oder Nutzfahrzeuge, und ein Verfahren zum Betreiben einer solchen Druckluftaufbereitungseinrichtung.

Druckluftversorgungseinrichtungen erfüllen in Schienenfahrzeugen und Nutzfahrzeugen zahlreiche Aufgaben. Hierzu gehört insbesondere die Versorgung der Bremsanlage und weiterer Druckluftverbraucher mit trockener gereinigter Druckluft. Die von den Druckluftverbrauchern genutzte Druckluft wird primär von einem Kompressor zur Verfügung gestellt und üblicherweise in einer Druckluftaufbereitungseinrichtung aufbereitet. Bei dieser Aufbereitung wird die Druckluft getrocknet und werden Öl- und Schmutzpartikel aus der Druckluft entfernt, bevor sie den Druckluftverbrauchern zugeführt wird.

Beim Anlauf von Kompressoren gegen Druck müssen hohe Momente überwunden werden. Hierdurch können große mechanische Belastungen entstehen und kann insbesondere der Antrieb des Kompressors entsprechend groß zu dimensionieren sein. Speziell bei niedrigen Temperaturen kann bei unzureichender Auslegung das Problem entstehen, dass der Kompressor gegen den Druck nicht anläuft. Bei ölgeschmierten Kompressoren kann ferner das Problem bestehen, dass die Schmierung beim Anlaufen unter Last noch nicht ausreichend ist. Um ein Anlaufen unter Last zu verhindern, ist es erstrebenswert, den Druck am Ausgang des Kompressors nach dem Stillstand soweit abzusenken, dass der Kompressor beim Wiederanlauf ohne oder nur mit verringertem Gegendruck starten kann.

In diesem Zusammenhang offenbaren zum Beispiel die DE 10 2006 043 863 A1 und die DE 30 42 069 A1 jeweils einen Kompressor mit einer integrierten Entlüftungsvorrichtung, damit der Kompressor möglichst gegendrucklos anlaufen kann.

Ferner zeigen zum Beispiel die DE 81 09 217 U1 und die DE 10 2010 054 712 A1 jeweils eine Druckluftversorgungseinrichtung, deren Druckluftleitung zwischen dem Kompressor und dem Lufttrockner über eine zusätzlich vorgesehene Entlüftungsleitung mit einer zusätzlich vorgesehenen Entlüftungsventileinrichtung entlüftet werden kann, um ein möglichst gegendruckloses Anlaufen des Kompressors zu ermöglichen.

Die EP 2 829 744 A2 und die US 2014/237962 A1 offenbaren ebenfalls Druckluftaufbereitungseinrichtungen dieser Gattung.

Es ist die Aufgabe der vorliegenden Erfindung, eine verbesserte Druckluftaufbereitungseinrichtung und ein verbessertes Verfahren zum Betreiben einer Druckluftaufbereitungseinrichtung zu schaffen, mit denen ohne zusätzliche Ventileinrichtungen ein Entlüften der Druckluftleitung möglich ist, um ein möglichst gegendruckloses Anlaufen eines eingangsseitig angeschlossenen Luftverdichters zu ermöglichen.

Diese Aufgabe wird gelöst durch die Lehre der unabhängigen Ansprüche. Vorteilhafte Ausgestaltungen der Erfindung sind Gegenstand der abhängigen Ansprüche.

Die erfindungsgemäße Druckluftaufbereitungseinrichtung weist einen Drucklufteingang, an den ein Luftverdichter anschließbar ist; einen Druckluftausgang, der über eine Druckluftleitung mit dem Drucklufteingang verbunden ist; und eine in der Druckluftleitung angeordnete Lufttrocknungseinrichtung auf. Gemäß der Erfindung ist zudem eine Steuereinrichtung vorgesehen, die ausgestaltet ist, um die Druckluftleitung stromauf der Lufttrocknungseinrichtung zu entlüften, wenn der Luftverdichter abgeschaltet wird.

Bei dem erfindungsgemäßen Verfahren zum Betreiben einer Druckluftaufbereitungseinrichtung, welche einen Drucklufteingang, an den ein Luftverdichter anschließbar ist, einen Druckluftausgang, der über eine Druckluftleitung mit dem Drucklufteingang verbunden ist, und eine in der Druckluftleitung angeordnete Lufttrocknungseinrichtung aufweist, wird die Druckluftleitung stromauf der Lufttrocknungseinrichtung entlüftet, wenn der Luftverdichter abgeschaltet wird.

Gemäß der vorliegenden Erfindung wird vorgeschlagen, die Druckluftleitung der Druckluftaufbereitungseinrichtung stromauf der Lufttrocknungseinrichtung mittels einer Steuereinrichtung der Druckluftaufbereitungseinrichtung über ohnehin vorhandene Ausgänge und Ventile zu entlüften, wenn der Luftverdichter abgeschaltet wird. Die Druckluftaufbereitungseinrichtung der Erfindung erfordert für diese Entlüftung keine Zusatzelemente. Außerdem ist eine schnelle und umfassende Entlüftung der Druckluftleitung möglich. Im Ergebnis kann ein im Wesentlichen gegendruckloses Anlaufen des mit der Druckluftaufbereitungseinrichtung gekoppelten Luftverdichters erreicht werden. Die Entlüftung der Druckluftleitung erfolgt dabei gemäß der Erfindung, wenn der Luftverdichter abgeschaltet wird, insbesondere sobald der Luftverdichter zum Stillstand gekommen ist.

Die Begriffe "stromauf und "stromab" beziehen sich in diesem Zusammenhang jeweils auf die Strömungsrichtung der Druckluft im Trocknungsbetrieb der Lufttrocknungseinrichtung. Während des Regenerationsbetriebs der Lufttrocknungseinrichtung oder eines Teils der Lufttrocknungseinrichtung ist diese Strömungsrichtung zumindest in einem Teil der Druckluftaufbereitungseinrichtung umgekehrt.

Vorzugsweise kann die Druckluftleitung stromauf der Lufttrocknungseinrichtung zunächst weiter entlüftet werden bzw. bleiben, wenn der Luftverdichter wieder eingeschaltet wird. So kann ein An- und Hochlaufen des Luftverdichters ohne nennenswerten Gegendruck, d.h. nur gegen einen durch die Ausströmverluste erzeugten Gegendruck ermöglicht werden. Die Entlüftung kann vorzugsweise für eine vorbestimmte Zeitdauer nach dem Starten des Luftverdichters, bis zum Erreichen einer vorbestimmten Drehzahl des Luftverdichters, oder dergleichen durchgeführt werden.

In einer vorteilhaften Ausgestaltung der Erfindung weist die Druckluftaufbereitungseinrichtung einen Entlüftungsausgang für einen Regenerationsbetrieb der Lufttrocknungseinrichtung auf, der über eine Entlüftungsleitung mit der Druckluftleitung stromauf der Lufttrocknungseinrichtung verbunden ist. Vorzugsweise ist zudem eine Auslassventileinrichtung in der Entlüftungsleitung vorgesehen.

Bei dieser Ausgestaltung wird die Druckluftleitung vorzugsweise über den Entlüftungsausgang entlüftet, wenn der Luftverdichter abgeschaltet wird.

Bei dieser Ausgestaltung wird vorzugsweise die Auslassventileinrichtung geöffnet, wenn der Luftverdichter abgeschaltet wird. Falls die Auslassventileinrichtung mehrere Auslassventile aufweist, wird zum Entlüften zumindest eines dieser Auslassventile geöffnet.

Falls bei dieser Ausgestaltung zudem eine Einlassventileinrichtung in der Druckluftleitung stromauf der Lufttrocknungseinrichtung vorgesehen ist, wird vorzugsweise diese Einlassventileinrichtung geöffnet, wenn der Luftverdichter abgeschaltet wird. Die Einlassventileinrichtung dient bevorzugt dem Umschalten zwischen einem Normal- bzw. Trocknungsbetrieb und einem Regenerationsbetrieb der Lufttrocknungseinrichtung. Falls die Einlassventileinrichtung mehrere Einlassventile aufweist, wird zum Entlüften zumindest eines dieser Einlassventile geöffnet.

In einer weiteren vorteilhaften Ausgestaltung der Erfindung weist die Druckluftaufbereitungseinrichtung ferner eine Vorfiltereinrichtung in der Druckluftleitung stromauf der Lufttrocknungseinrichtung auf, die über eine Ablassleitung mit einem Ablassausgang verbunden ist. Vorzugsweise ist zudem eine Ablassventileinrichtung in dieser Ablassleitung der Vorfiltereinrichtung vorgesehen.

Bei dieser Ausgestaltung wird die Druckluftleitung vorzugsweise über den Ablassausgang entlüftet, wenn der Luftverdichter abgeschaltet wird.

Bei dieser Ausgestaltung wird vorzugsweise die Ablassventileinrichtung geöffnet, wenn der Luftverdichter abgeschaltet wird. Falls die Ablassventileinrichtung mehrere Ablassventile aufweist, wird zum Entlüften zumindest eines dieser Ablassventile geöffnet.

Die Entlüftung der Druckluftleitung kann wahlweise über den Entlüftungsausgang für den Regenerationsbetrieb der Lufttrocknungseinrichtung, über den Ablassausgang der Vorfiltereinrichtung, oder auch sowohl über den Entlüftungsausgang als auch den Ablassausgang erfolgen.

In einer weiteren vorteilhaften Ausgestaltung der Erfindung weist die Druckluftaufbereitungseinrichtung wenigstens ein Rückschlagventil auf, das ausgewählt ist aus einem Rückschlagventil in der Druckluftleitung stromab der Lufttrocknungseinrichtung und einem Rückschlagventil in der Druckluftleitung stromab der Vorfiltereinrichtung. Ein solches Rückschlagventil soll ein Rückströmen der Druckluft aus dem an die Druckluftaufbereitungseinrichtung angeschlossenen Druckluftsystem verhindern.

Gegenstand der Erfindung ist auch eine Druckluftversorgungseinrichtung mit einer oben beschriebenen Druckluftaufbereitungseinrichtung der Erfindung und einem an diese angeschlossenen bzw. anschließbaren Luftverdichter.

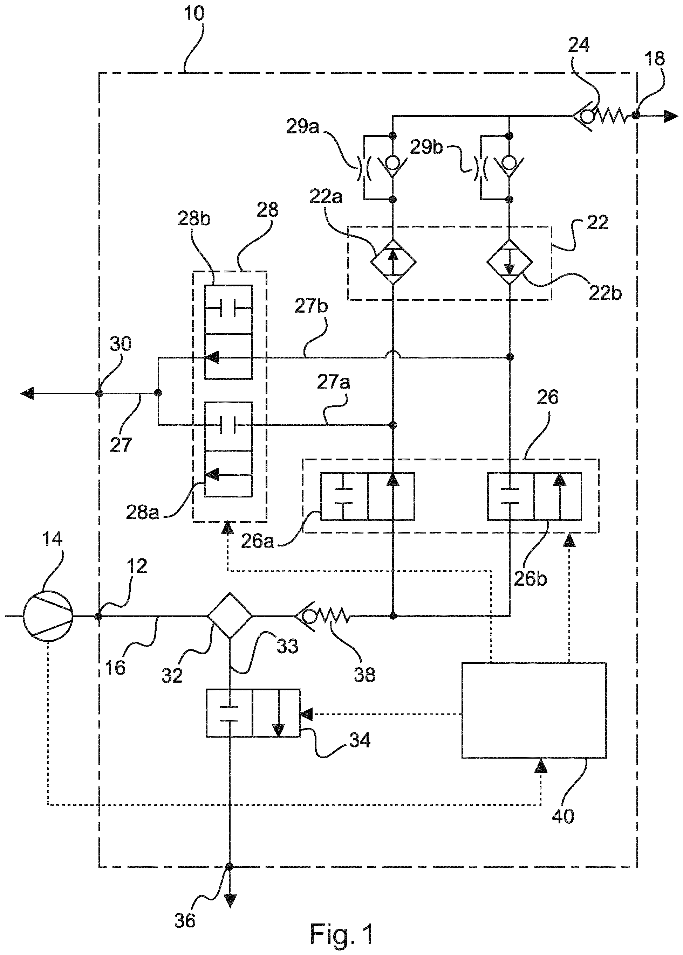

Obige sowie weitere Vorteile, Merkmale und Anwendungsmöglichkeiten der Erfindung werden aus der nachfolgenden Beschreibung eines Ausführungsbeispiels anhand der beiliegenden Zeichnung besser verständlich. Darin zeigt die einzige Figur 1 größtenteils schematisch den Aufbau einer Druckluftversorgungseinrichtung gemäß einem Ausführungsbeispiel der Erfindung.

Bezug nehmend auf **Fig. 1** werden Aufbau und Funktionsweise einer Druckluftversorgungseinrichtung gemäß einem Ausführungsbeispiel näher erläutert. Dabei sind in Fig. 1 der Einfachheit halber einige weitere Komponenten wie Filter, Ventile, Drosseln, Sensoren, etc. weggelassen, die in einer solchen Druckluftversorgungseinrichtung typischerweise vorhanden sind, aber für das Verständnis der vorliegenden Erfindung nicht erforderlich scheinen.

Die Druckluftversorgungseinrichtung weist eine Druckluftaufbereitungseinrichtung 10 und einen an diese angeschlossenen Luftverdichter 14 zum Beispiel in Form eines Kompressors auf. Die Druckluftaufbereitungseinrichtung 10 besitzt einen Drucklufteingang 12, der mit dem Luftverdichter 14 koppelbar ist und der über eine Druckluftleitung 16 mit einem Druckluftausgang 18 verbunden ist. An diesen Druckluftausgang 18 können ein oder mehrere Druckluftverbraucher angeschlossen werden.

Die vom Drucklufteingang 12 über die Druckluftleitung 16 geförderte Druckluft wird in einem Lufttrockner getrocknet und bevorzugt auch gereinigt, insbesondere von Öl-, Ruß- und Schmutzpartikeln, die bereits in der Luft enthalten waren oder beim Verdichtungsprozess im Luftverdichter 14 eingebracht worden sind. Der Lufttrockner weist hierzu eine Lufttrocknungseinrichtung 22 und verschiedene Einlass- und Auslassventileinrichtungen 26, 28 auf. Im Ausführungsbeispiel von Fig. 1 weist die Lufttrocknungseinrichtung 22 einen ersten Trocknungsbehälter 22a und einen zweiten Trocknungsbehälter 22b auf, die strömungstechnisch parallel zueinander angeordnet sind. Stromab der Trocknungsbehälter 22a, 22b ist jeweils eine Parallelschaltung aus einem Rückschlagventil und einer Regenerationsdüse bzw. -drossel 29a, 29b vorgesehen.

Stromab der Lufttrocknungseinrichtung 22 ist in der Druckluftleitung 16 ein Rückschlagventil 24 angeordnet. Dieses Rückschlagventil 24 soll verhindern, dass Druckluft von dem an den Druckluftausgang 18 angeschlossenen Druckluftsystem zurück in die Druckluftaufbereitungseinrichtung 10 strömt.

Stromauf der Lufttrocknungseinrichtung 22 ist in der Druckluftleitung 16 eine Einlassventileinrichtung 26 angeordnet. Entsprechend den zwei Trocknungsbehältern 22a, 22b der Lufttrocknungseinrichtung 22 weist diese Einlassventileinrichtung 26 in diesem Ausführungsbeispiel ein erstes Einlassventil 26a stromauf des ersten Trocknungsbehälters 22a und ein zweites Einlassventil 26b stromauf des zweiten Trocknungsbehälters 22b auf.

In anderen Ausführungsformen kann die Lufttrocknungseinrichtung 22 auch nur einen Trocknungsbehälter oder mehr als zwei Trocknungsbehälter enthalten.

Zwischen der Einlassventileinrichtung 26 und der Lufttrocknungseinrichtung 22 zweigt von der Druckluftleitung 16 eine Entlüftungsleitung 27 ab. Im Ausführungsbeispiel von Fig. 1 weist die Entlüftungsleitung 27 eine erste Entlüftungszweigleitung 27a, die mit dem ersten Trocknungsbehälter 22a der Lufttrocknungseinrichtung 22 gekoppelt ist, und eine zweite Entlüftungszweigleitung 27b, die mit dem zweiten Trocknungsbehälter 22a gekoppelt ist, auf. Die Entlüftungsleitung 27 ist mit einem Entlüftungsausgang 30 der Druckluftaufbereitungseinrichtung 10 verbunden.

Zudem ist in der Entlüftungsleitung 27 eine Auslassventileinrichtung 28 angeordnet. In dem Ausführungsbeispiel von Fig. 1 weist diese Auslassventileinrichtung 28 ein erstes Auslassventil 28a, das in der ersten Entlüftungszweigleitung 27a angeordnet ist, und ein zweites Auslassventil 28b, das in der zweiten Entlüftungszweigleitung 27b angeordnet ist, auf.

Die Einlassventileinrichtung 26 und die Auslassventileinrichtung 28 werden von einer in die Druckluftaufbereitungseinrichtung 10 integrierten oder mit dieser verbundenen Steuereinrichtung 40 angesteuert.

Bei laufendem Luftverdichter 14 wird in der Druckluftleitung 16 Druckluft bereitgestellt, die zum Druckluftausgang 18 gefördert wird. Die Steuereinrichtung 40 steuert die beiden Einlassventile 26a, 26b der Einlassventileinrichtung 26 vorzugsweise gegenläufig zueinander, sodass die beiden Trocknungsbehälter 22a, 22b der Lufttrocknungseinrichtung 22 antiparallel von Druckluft durchströmt werden. So wird der eine Trocknungsbehälter (im Betriebszustand von Fig. 1 der erste Trocknungsbehälter 22a) im Normalbetrieb zum Trocknen der Druckluft betrieben, während der andere Trocknungsbehälter (im Betriebszustand von Fig. 1 der zweite Trocknungsbehälter 22b) im Regenerationsbetrieb betrieben wird. Die beiden Auslassventile 28a, 28b der Auslassventileinrichtung 28 werden von der Steuereinrichtung 40 ebenfalls vorzugsweise gegenläufig zueinander angesteuert, wobei das erste Auslassventil 28a geschlossen wird, wenn das erste Einlassventil 26a geöffnet ist und umgekehrt, und das zweite Auslassventil 28b geöffnet wird, wenn das zweite Einlassventil 26b geschlossen ist und umgekehrt.

In dem in Fig. 1 dargestellten Betriebszustand ist das erste Einlassventil 26a der Einlassventileinrichtung 26 geöffnet, sodass die vom Luftverdichter 14 bereitgestellte Druckluft durch den ersten Trocknungsbehälter 22a der Lufttrocknungseinrichtung 22 strömt und dann am Druckluftausgang 18 zur Verfügung gestellt wird. Ein Teil der im ersten Trocknungsbehälter 22a gereinigten und getrockneten Druckluft wird abgezweigt und über die zweite Regenerationsdüse 29b durch den zweiten Trocknungsbehälter 22b der Lufttrocknungseinrichtung 22 zurückgeführt, um das Trockenmittel im zweiten Trocknungsbehälter 22b zu regenerieren. Diese Druckluft wird dann über die zweite Entlüftungszweigleitung 27b durch das geöffnete zweite Auslassventil 28b zum Entlüftungsausgang 30 ausgegeben. Anschließend werden die Schaltzustände der Einlass- und Auslassventileinrichtungen 26, 28 von der Steuereinrichtung 40 geändert, sodass die Druckluft im zweiten Trocknungsbehälter 22b der Lufttrocknungseinrichtung 22 gereinigt und getrocknet wird, während das Trockenmittel im ersten Trocknungsbehälter 22a regeneriert wird.

Um zu verhindern, dass der Luftverdichter 14 beim Anlaufen bzw. Wiederanlaufen gegen einen hohen Druck in der Druckluftleitung 16 arbeiten muss, wird die Druckluftleitung 16 der Druckluftversorgungseinrichtung möglichst schnell und möglichst vollständig entlüftet, wenn der Luftverdichter 14 abgeschaltet wird, bevorzugt sobald der Luftverdichter 14 zum Stillstand kommt. Für diese Maßnahme sind keine Zusatzelemente erforderlich; die Steuereinrichtung 40 steuert vielmehr die ohnehin in der Druckluftaufbereitungseinrichtung 10 vorhandenen Einlass- und Auslassventileinrichtungen 26, 28 in einem speziellen Entlüftungsbetrieb an. In diesem Entlüftungsbetrieb werden zum Beispiel alle Einlassventile 26a, 26b der Einlassventileinrichtung 26 und alle Auslassventile 28a, 28b der Auslassventileinrichtung 28 geöffnet oder erstes Einlassventil 26a und erstes Auslassventil 28a geöffnet oder zweites Einlassventil 26b und zweites Auslassventil 28b geöffnet, sodass die Druckluft in der Druckluftleitung 16 über die Entlüftungsleitung 27 zum Entlüftungsausgang 30 entweichen kann.

Beim Wiederanlaufen des Luftverdichters 14 bleiben die Einlass- und Auslassventile 26, 28 vorzugsweise zunächst in diesem Entlüftungsbetriebszustand bzw. werden vorübergehend wieder in diesen versetzt. Das Anlaufen des Luftverdichters 14 erfolgt so nur gegen den durch die Ausströmverluste erzeugten Gegendruck, nicht aber gegen einen durch die erzeugte Druckluft in der Druckluftleitung 16 aufgebauten Gegendruck. Der Entlüftungsbetriebszustand wird beispielsweise angesteuert, bis eine vorbestimmte Zeitdauer seit dem Anlaufen des Luftverdichters 14 abgelaufen ist oder bis der Luftverdichter 14 eine vorbestimmte Drehzahl erreicht.

Die Informationen über den Betriebszustand des Luftverdichters 14 erhält die Steuereinrichtung 40 der Druckluftaufbereitungseinrichtung 10 zum Beispiel direkt vom Luftverdichter 14, dessen Ansteuerung oder auch von einer Fahrzeugsteuerung.

In dem Ausführungsbeispiel von Fig. 1 ist in der Druckluftleitung 16 stromauf der Lufttrocknungseinrichtung 22 und der Einlassventileinrichtung 26, d.h. stromauf des Lufttrockners ferner eine Vorfiltereinrichtung 32 zur Vorfiltration der Druckluft angeordnet. Die Vorfiltereinrichtung 32 soll zum Beispiel Flüssigkeiten und Dämpfe vor dem Eintritt der Druckluft in den Lufttrockner abscheiden.

Die Vorfiltereinrichtung 32 ist über eine Ablassleitung 33 mit einem Ablassausgang 36 verbunden, um die in der Vorfiltereinrichtung 32 abgeschieden Flüssigkeiten (z.B. Öl, Wasser, etc.) regelmäßig abzulassen. Zu diesem Zweck ist in der Ablassleitung 33 zudem eine Ablassventileinrichtung 34 angeordnet, die ebenfalls von der Steuereinrichtung 40 angesteuert wird.

Wie in Fig. 1 dargestellt, ist außerdem ein weiteres Rückschlagventil 38 in der Druckluftleitung 16 zwischen Vorfiltereinrichtung 32 und Lufttrockner vorgesehen.

Alternativ oder zusätzlich zu dem oben beschriebenen Entlüftungsvorgang der Druckluftleitung 16 kann ohne den Einsatz von Zusatzelementen eine Entlüftung der Druckluftleitung 16 auch über die Vorfiltereinrichtung 32 erfolgen. Soll die Entlüftung allein über die Vorfiltereinrichtung 32 erfolgen, so schließt die Steuereinrichtung 40 die beiden Einlassventile 26a, 26b der Einlassventileinrichtung 26 und öffnet die Ablassventileinrichtung 34. Soll die Entlüftung der Druckluftleitung 16 über den Entlüftungsausgang 30 und den Ablassausgang 36 erfolgen, so öffnet die Steuereinrichtung 40 die beiden Einlassventile 26a, 26b der Einlassventileinrichtung 26, die beiden Auslassventile 28a, 28b der Auslassventileinrichtung 28 und die Ablassventileinrichtung 34.

Das Entwässern der Vorfiltereinrichtung 32 nach einem Stillstand des Luftverdichters 14 ist zudem vorteilhaft, um ein Einfrieren bei niedrigen Betriebstemperaturen zu verhindern.

Der zeitliche Verlauf des Druckabfalls in der Druckluftleitung 16 kann zudem optional über Drosseln oder Düsen (nicht dargestellt) in der Entlüftungsleitung 27 bzw. der Ablassleitung 33 verändert bzw. geregelt werden.

Die Erfindung ist nicht auf das oben beschriebene Ausführungsbeispiel von Fig. 1 beschränkt. Der Fachmann erkennt vielmehr zahlreiche Modifikationen im Rahmen der vorliegenden Erfindung.

Zum Beispiel kann die Vorfiltereinrichtung 32 stromauf des Lufttrockners auch mehrere (z. B. zwei) Vorfilter aufweisen, die in Strömungsrichtung der Druckluft nacheinander in der Druckluftleitung 16 angeordnet sind. Dementsprechend weist die Ablassleitung 33 eine mit dem ersten Vorfilter verbundene erste Ablasszweigleitung und eine mit dem zweiten Vorfilter verbundene zweite Ablasszweigleitung auf. Außerdem kann die Ablassventileinrichtung 34 in dieser Ausführungsform ein erstes Ablassventil in der ersten Ablasszweigleitung und ein zweites Ablassventil in der zweiten Ablasszweigleitung aufweisen.

Ein Entlüften der Druckluftleitung 16 kann mittels entsprechender Ansteuerung der Ablassventileinrichtung 34 durch die Steuereinrichtung 40 wahlweise über eine der beiden Ablasszweigleitungen der über alle vorhandenen Ablasszweigleitungen erfolgen.

Falls die Lufttrocknungseinrichtung 22 nur einen Trocknungsbehälter aufweist, sind dementsprechend nur eine Entlüftungsleitung 27 und eine Auslassventileinrichtung 28 mit nur einem Auslassventil in dieser Entlüftungsleitung 27 vorgesehen. Parallel zur Lufttrocknungseinrichtung 22 ist dann bevorzugt eine Regenerationsleitung vorgesehen. Die Einlassventileinrichtung 26 kann in dieser Ausführungsvariante ein oder mehrere Einlassventile aufweisen.

Darüber hinaus sind im Rahmen der Erfindung auch Ausführungsformen denkbar, bei denen auf eine Vorfiltereinrichtung 32 mit entsprechender Ablassventileinrichtung 34 und entsprechendem Ablassausgang 36 verzichtet werden kann.

Nachfolgend werden einige Beispiele für eine Druckluftaufbereitungseinrichtung 10, eine Druckluftversorgungseinrichtung und ein Verfahren zum Betreiben einer Druckluftaufbereitungseinrichtung 10 angegeben.

Gemäß einem ersten Beispiel weist eine Druckluftaufbereitungseinrichtung 10, insbesondere für Schienenfahrzeuge oder Nutzfahrzeuge, auf: einen Drucklufteingang 12, an den ein Luftverdichter 14 anschließbar ist, einen Druckluftausgang 18, der über eine Druckluftleitung 16 mit dem Drucklufteingang 12 verbunden ist, und eine in der Druckluftleitung 16 angeordnete Lufttrocknungseinrichtung 22, wobei die Druckluftaufbereitungseinrichtung 10 eine Steuereinrichtung 40, die ausgestaltet ist, um die Druckluftleitung 16 stromauf der Lufttrocknungseinrichtung 22 zu entlüften, wenn der Luftverdichter 14 abgeschaltet wird, aufweist.

Gemäß einem zweiten Beispiel, das die Merkmale des ersten Beispiels aufweist, ist ein Entlüftungsausgang 30 für einen Regenerationsbetrieb der Lufttrocknungseinrichtung 22 vorgesehen, der über eine Entlüftungsleitung 27 mit der Druckluftleitung 16 stromauf der Lufttrocknungseinrichtung 22 verbunden ist, und die Steuereinrichtung 40 ist ausgestaltet, um die Druckluftleitung 16 über den Entlüftungsausgang 30 zu entlüften, wenn der Luftverdichter 14 abgeschaltet wird.

Gemäß einem dritten Beispiel, das die Merkmale des zweiten Beispiels aufweist, ist eine Auslassventileinrichtung 28 in der Entlüftungsleitung 27 vorgesehen, und die Steuereinrichtung 40 ist ausgestaltet, um die Auslassventileinrichtung 28 offen anzusteuern, wenn der Luftverdichter 14 abgeschaltet wird.

Gemäß einem vierten Beispiel, das die Merkmale des zweiten oder dritten Beispiels aufweist, ist eine Einlassventileinrichtung 26 in der Druckluftleitung 16 stromauf der Lufttrocknungseinrichtung 22 vorgesehen und die Steuereinrichtung 40 ist ausgestaltet, um die Einlassventileinrichtung 26 offen anzusteuern, wenn der Luftverdichter 14 abgeschaltet wird.

Gemäß einem fünften Beispiel, das die Merkmale von einem von dem ersten bis vierten Beispiel aufweist, ist eine Vorfiltereinrichtung 32 in der Druckluftleitung 16 stromauf der Lufttrocknungseinrichtung 22 vorgesehen, die über eine Ablassleitung 33 mit einem Ablassausgang 36 verbunden ist, und die Steuereinrichtung 40 ist ausgestaltet, um die Druckluftleitung 16 über den Ablassausgang 36 zu entlüften, wenn der Luftverdichter 14 abgeschaltet wird.

Gemäß einem sechsten Beispiels, das die Merkmale des fünften Beispiels enthält, ist eine Ablassventileinrichtung 34 in der Ablassleitung 33 der Vorfiltereinrichtung 32 vorgesehen und die Steuereinrichtung 40 ist ausgestaltet, um die Ablassventileinrichtung 34 offen anzusteuern, wenn der Luftverdichter 14 abgeschaltet wird.

Gemäß einem siebten Beispiel, das die Merkmale von einem von dem ersten bis sechsten Beispiel aufweist, weist die Druckluftaufbereitungseinrichtung 10 ferner ein Rückschlagventil 24 in der Druckluftleitung 16 stromab der Lufttrocknungseinrichtung 22 und/oder ein Rückschlagventil 38 in der Druckluftleitung 16 stromab der Vorfiltereinrichtung 32 auf.

Gemäß einem achten Beispiel weist eine Druckluftversorgungseinrichtung eine Druckluftaufbereitungseinrichtung 10 entsprechend einem von dem ersten bis siebten Beispiel und einen Luftverdichter 14, der an den Drucklufteingang 12 der Druckluftaufbereitungseinrichtung 10 angeschlossen ist oder anschließbar ist, auf.

Gemäß einem neunten Beispiel wird in einem Verfahren zum Betreiben einer Druckluftaufbereitungseinrichtung 10, insbesondere für Schienenfahrzeuge oder Nutzfahrzeuge, wobei die Druckluftaufbereitungseinrichtung 10 einen Drucklufteingang 12, an den ein Luftverdichter 14 anschließbar ist, einen Druckluftausgang 18, der über eine Druckluftleitung 16 mit dem Drucklufteingang 12 verbunden ist, und eine in der Druckluftleitung 16 angeordnete Lufttrocknungseinrichtung 22 aufweist, die Druckluftleitung 16 stromauf der Lufttrocknungseinrichtung 22 entlüftet, wenn der Luftverdichter 14 abgeschaltet wird.

Gemäß einem zehnten Beispiel, das die Merkmale des neunten Beispiels enthält, wird die Druckluftleitung 16 stromauf der Lufttrocknungseinrichtung 22 zunächst weiter entlüftet, wenn der Luftverdichter 14 wieder eingeschaltet wird.

Gemäß einem elften Beispiel, das die Merkmale des neunten Beispiels enthält, weist die Druckluftaufbereitungseinrichtung 10 einen Entlüftungsausgang 30 für einen Regenerationsbetrieb der Lufttrocknungseinrichtung 22 auf, der über eine Entlüftungsleitung 27 mit der Druckluftleitung 16 stromauf der Lufttrocknungseinrichtung 22 verbunden ist, und die Druckluftleitung 16 wird über den Entlüftungsausgang 30 entlüftet, wenn der Luftverdichter 14 abgeschaltet wird.

Gemäß einem zwölften Beispiel, das die Merkmale des elften Beispiels enthält, weist die Druckluftaufbereitungseinrichtung 10 eine Auslassventileinrichtung 28 in der Entlüftungsleitung 27 auf; und die Auslassventileinrichtung 28 wird geöffnet, wenn der Luftverdichter 14 abgeschaltet wird.

Gemäß einem dreizehnten Beispiel, das die Merkmale des elften oder zwölften Beispiels enthält, weist die Druckluftaufbereitungseinrichtung 10 ferner eine Einlassventileinrichtung 26 in der Druckluftleitung 16 stromauf der Lufttrocknungseinrichtung 22 auf und die Einlassventileinrichtung 26 wird geöffnet, wenn der Luftverdichter 14 abgeschaltet wird.

Gemäß einem vierzehnten Beispiel, das die Merkmale von einem von dem neunten bis dreizehnten Beispiels enthält, weist die Druckluftaufbereitungseinrichtung 10 eine Vorfiltereinrichtung 32 in der Druckluftleitung 16 stromauf der Lufttrocknungseinrichtung 22 auf, die über eine Ablassleitung 33 mit einem Ablassausgang 26 verbunden ist, und die Druckluftleitung 16 wird über den Ablassausgang 36 entlüftet, wenn der Luftverdichter 14 abgeschaltet wird.

Gemäß einem fünfzehnten Beispiel, das die Merkmale des vierzehnten Beispiels enthält, weist die Druckluftaufbereitungseinrichtung 10 ferner eine Ablassventileinrichtung 34 in der Ablassleitung 33 der Vorfiltereinrichtung 32 auf und die Ablassventileinrichtung 34 wird geöffnet, wenn der Luftverdichter 14 abgeschaltet wird.

### BEZUGSZEICHENLISTE

- 10: Druckluftaufbereitungseinrichtung
- 12: Drucklufteingang
- 14: Luftverdichter, z.B. Kompressor
- 16: Druckluftleitung
- 18: Druckluftausgang
- 22: Lufttrocknungseinrichtung
- 22a: erster Trocknungsbehälter
- 22b: zweiter Trocknungsbehälter
- 24: Rückschlagventil
- 26: Einlassventileinrichtung
- 26a: erstes Einlassventil
- 26b: zweites Einlassventil
- 27: Entlüftungsleitung
- 27a: erste Entlüftungszweigleitung
- 27b: zweite Entlüftungszweigleitung
- 28: Auslassventileinrichtung
- 28a: erstes Auslassventil
- 28b: zweites Auslassventil
- 29a: erste Regenerationsdüse
- 29b: zweite Regenerationsdüse
- 30: Entlüftungsausgang
- 32: Vorfiltereinrichtung
- 33: Ablassleitung
- 34: Ablassventileinrichtung
- 36: Ablassausgang
- 38: Rückschlagventil
- 40: Steuereinrichtung

## Patentansprüche

1. Druckluftaufbereitungseinrichtung (10), insbesondere für Schienenfahrzeuge oder Nutzfahrzeuge, aufweisend:
einen Drucklufteingang (12), an den ein Luftverdichter (14) anschließbar ist;
einen Druckluftausgang (18), der über eine Druckluftleitung (16) mit dem Drucklufteingang (12) verbunden ist; und
eine in der Druckluftleitung (16) angeordnete Lufttrocknungseinrichtung (22), wobei
eine Steuereinrichtung (40), die ausgestaltet ist, um die Druckluftleitung (16) stromauf der Lufttrocknungseinrichtung (22) zu entlüften, wenn der Luftverdichter (14) abgeschaltet wird, vorgesehen ist,
eine Vorfiltereinrichtung (32) in der Druckluftleitung (16) stromauf der Lufttrocknungseinrichtung (22) vorgesehen ist, die über eine Ablassleitung (33) mit einem Ablassausgang (36) verbunden ist;
die Steuereinrichtung (40) ausgestaltet ist, um die Druckluftleitung (16) über den Ablassausgang (36) zu entlüften, wenn der Luftverdichter (14) abgeschaltet wird, und die Druckluftaufbereitungseinrichtung (10) ein Rückschlagventil (38) in der Druckluftleitung (16) stromab der Vorfiltereinrichtung (32) zwischen der Vorfiltereinrichtung (32) und der Lufttrocknungseinrichtung (22) aufweist.

2. Druckluftaufbereitungseinrichtung nach Anspruch 1, bei welcher
ein Entlüftungsausgang (30) für einen Regenerationsbetrieb der Lufttrocknungseinrichtung (22) vorgesehen ist, der über eine Entlüftungsleitung (27) mit der Druckluftleitung (16) stromauf der Lufttrocknungseinrichtung (22) verbunden ist; und
die Steuereinrichtung (40) ausgestaltet ist, um die Druckluftleitung (16) über den Entlüftungsausgang (30) zu entlüften, wenn der Luftverdichter (14) abgeschaltet wird.

3. Druckluftaufbereitungseinrichtung nach Anspruch 2, bei welcher
eine Auslassventileinrichtung (28) in der Entlüftungsleitung (27) vorgesehen ist; und
die Steuereinrichtung (40) ausgestaltet ist, um die Auslassventileinrichtung (28) offen anzusteuern, wenn der Luftverdichter (14) abgeschaltet wird.

4. Druckluftaufbereitungseinrichtung nach Anspruch 2 oder 3, bei welcher eine Einlassventileinrichtung (26) in der Druckluftleitung (16) stromauf der Lufttrocknungseinrichtung (22) vorgesehen ist; und
die Steuereinrichtung (40) ausgestaltet ist, um die Einlassventileinrichtung (26) offen anzusteuern, wenn der Luftverdichter (14) abgeschaltet wird.

5. Druckluftaufbereitungseinrichtung nach einem der Ansprüche 1 bis 4, bei welcher eine Ablassventileinrichtung (34) in der Ablassleitung (33) der Vorfiltereinrichtung (32) vorgesehen ist; und
die Steuereinrichtung (40) ausgestaltet ist, um die Ablassventileinrichtung (34) offen anzusteuern, wenn der Luftverdichter (14) abgeschaltet wird.

6. Druckluftaufbereitungseinrichtung nach einem der vorhergehenden Ansprüche, welche
ferner ein Rückschlagventil (24) in der Druckluftleitung (16) stromab der Lufttrocknungseinrichtung (22) aufweist.

7. Druckluftversorgungseinrichtung, aufweisend:
eine Druckluftaufbereitungseinrichtung (10) nach einem der vorhergehenden Ansprüche; und
einen Luftverdichter (14), der an den Drucklufteingang (12) der Druckluftaufbereitungseinrichtung (10) angeschlossen ist oder anschließbar ist.

8. Verfahren zum Betreiben einer Druckluftaufbereitungseinrichtung, insbesondere für Schienenfahrzeuge oder Nutzfahrzeuge, wobei die Druckluftaufbereitungseinrichtung (10) einen Drucklufteingang (12), an den ein Luftverdichter (14) anschließbar ist, einen Druckluftausgang (18), der über eine Druckluftleitung (16) mit dem Drucklufteingang (12) verbunden ist, und eine in der Druckluftleitung (16) angeordnete Lufttrocknungseinrichtung (22) aufweist,
wobei
die Druckluftaufbereitungseinrichtung (10) eine Vorfiltereinrichtung (32) in der Druckluftleitung (16) stromauf der Lufttrocknungseinrichtung (22) aufweist, die über eine Ablassleitung (33) mit einem Ablassausgang (26) verbunden ist; und die Druckluftleitung (16) stromauf der Lufttrocknungseinrichtung (22) über den Ablassausgang (36) entlüftet wird, wenn der Luftverdichter (14) abgeschaltet wird, und
ein Rückschlagventil (38) in der Druckluftleitung (16) stromab der Vorfiltereinrichtung (32) zwischen der Vorfiltereinrichtung (32) und der Lufttrocknungseinrichtung (22) ein Rückströmen der Druckluft aus einem an die Druckluftaufbereitungseinrichtung (10) angeschlossenen Druckluftsystem verhindert, wenn der Luftverdichter (14) abgeschaltet wird.

9. Verfahren nach Anspruch 8, bei welchem
die Druckluftleitung (16) stromauf der Lufttrocknungseinrichtung (22) zunächst weiter entlüftet wird, wenn der Luftverdichter (14) wieder eingeschaltet wird.

10. Verfahren nach Anspruch 8 oder 9, bei welchem
die Druckluftaufbereitungseinrichtung (10) einen Entlüftungsausgang (30) für einen Regenerationsbetrieb der Lufttrocknungseinrichtung (22) aufweist, der über eine Entlüftungsleitung (27) mit der Druckluftleitung (16) stromauf der Lufttrocknungseinrichtung (22) verbunden ist; und
die Druckluftleitung (16) über den Entlüftungsausgang (30) entlüftet wird, wenn der Luftverdichter (14) abgeschaltet wird.

11. Verfahren nach Anspruch 10, bei welchem
die Druckluftaufbereitungseinrichtung (10) eine Auslassventileinrichtung (28) in der Entlüftungsleitung (27) aufweist; und
die Auslassventileinrichtung (28) geöffnet wird, wenn der Luftverdichter (14) abgeschaltet wird.

12. Verfahren nach Anspruch 10 oder 11, bei welchem
die Druckluftaufbereitungseinrichtung (10) ferner eine Einlassventileinrichtung (26) in der Druckluftleitung (16) stromauf der Lufttrocknungseinrichtung (22) aufweist; und
die Einlassventileinrichtung (26) geöffnet wird, wenn der Luftverdichter (14) abgeschaltet wird.

13. Verfahren nach einem der Ansprüche 8 bis 12, bei welchem die Druckluftaufbereitungseinrichtung (10) ferner eine Ablassventileinrichtung (34) in der Ablassleitung (33) der Vorfiltereinrichtung (32) aufweist; und
die Ablassventileinrichtung (34) geöffnet wird, wenn der Luftverdichter (14) abgeschaltet wird.

## Claims

1. A compressed air preparation device (10), in particular for rail vehicles or utility vehicles, having:
a compressed air inlet (12), to which an air compressor (14) can be connected;
a compressed air outlet (18) that is connected via a compressed air line (16) to the compressed air inlet (12); and
an air drying device (22) arranged in the compressed air line (16);
there being provided a control device (40) that is configured to vent the compressed air line (16) upstream of the air drying device (22) when the air compressor (14) is switched off;
there being provided in the compressed air line (16) upstream of the air drying device (22) a pre-filter device (32) that is connected via a discharge line (33) to a discharge outlet (36);
the control device (40) being configured to vent the compressed air line (16) via the discharge outlet (36) when the air compressor (14) is switched off, and the compressed air preparation device (10) having a check valve (38) in the compressed air line (16) downstream of the pre-filter device (32) between the pre-filter device (32) and the air drying device (22).

2. A compressed air preparation device according to claim 1, in which
Is provided a venting outlet (30) for a regeneration mode of the air drying device (22), this venting outlet (30) being connected via a venting line (27) to the compressed air line (16) upstream of the air drying device (22); and
the control device (40) being configured to vent the compressed air line (16) via the venting outlet (30) when the air compressor (14) is switched off.

3. A compressed air preparation device according to claim 2, in which
an outlet valve device (28) is provided in the venting line (27); and
the control device (40) is configured to switch outlet valve device (28) to open when the air compressor (14) is switched off.

4. A compressed air preparation device according to claim 2 or 3, in which
an inlet valve device (26) is provided in the compressed air line (16) upstream of the air drying device (22); and
the control device (40) is configured to switch the inlet valve device (26) to open when the air compressor (14) is switched off.

5. A compressed air preparation device according to one of claims 1 to 4, in which a discharge valve device (34) is provided in the discharge line (33) of the pre-filter device (32); and
the control device (40) is configured to switch the discharge valve device (34) to open when the air compressor (14) is switched off.

6. A compressed air preparation device according to any one of the preceding claims, that
also has a check valve (24) in the compressed air line (16) downstream of the air drying device (22).

7. A compressed air supply device, having:
a compressed air preparation device (10) according to any one of the preceding claims; and
an air compressor (14) that is connected or can be connected to the compressed air inlet (12) of the compressed air preparation device (10).

8. A method for operating a compressed air preparation device, in particular for rail vehicles or utility vehicles, the compressed air preparation device (10) having a compressed air inlet (12) to which an air compressor (14) can be connected, a compressed air outlet (18) that is connected via a compressed air line (16) to the compressed air inlet (12), and an air drying device (22) arranged in the compressed air line (16),
the compressed air preparation device (10) having in the compressed air line (16) upstream of the air drying device (22) a pre-filter device (32) that is connected via a discharge line (33) to a discharge outlet (36); and the compressed air line (16) being vented upstream of the drying device (22) via the discharge outlet (36) when the air compressor (14) is switched off,
and
a check valve (38) in the compressed air line (16) downstream of the pre-filter device (32) between the pre-filter device (32) and the air drying device (22) preventing the compressed air from flowing back out of a compressed air system connected to the compressed air preparation device (10) when the air compressor (14) is switched off.

9. A method according to claim 6, in which
the compressed air line (16) upstream of the air drying device (22) is further vented when the air compressor (14) is switched on again.

10. A method according to claim 8 or 9, in which
the compressed air preparation device (10) has a venting outlet (30) for a regeneration mode of the air drying device (22), this venting outlet (30) being connected via a venting line (27) to the compressed air line (16) upstream of the air drying device (22); and
the compressed air line (16) is vented via the venting outlet (30) when the air compressor (14) is switched off.

11. A method according to claim 10, in which
the compressed air preparation device (10) has an outlet valve device (28) in the venting line (27); and
the outlet valve device (28) is opened when the air compressor (14) is switched off.

12. A method according to claim 10 or 11, in which
the compressed air preparation device (10) also has an inlet valve device (26) in the compressed air line (16) upstream of the air drying device (22); and
the inlet valve device (26) is opened when the air compressor (14) is switched off.

13. A method according to one of claims 8 to 12, in which
the compressed air preparation device (10) also has a discharge valve device (34) in the discharge line (33) of the pre-filter device (32); and
the discharge valve device (34) is opened when the air compressor (14) is switched off.

## Revendications

1. Dispositif (10) de préparation d'air comprimé, notamment pour des véhicules ferroviaires ou des véhicules utilitaires, comportant :
une entrée (12) d'air comprimé, à laquelle peut être raccordé un compresseur (14) d'air ;
une sortie (18) d'air comprimé, qui communique avec l'entrée (12) d'air comprimé par un conduit (16) pour de l'air comprimé ; et
un dispositif (22) de séchage de l'air monté dans le conduit (16) pour de l'air comprimé, dans lequel
il est prévu un dispositif (40) de commande, conformé pour purger le conduit (16) pour de l'air comprimé en amont du dispositif (22) de séchage de l'air, si le compresseur (14) d'air est arrêté,
il est prévu, en amont du dispositif (22) de séchage de l'air, un dispositif (32) de préfiltration dans le conduit (16) pour de l'air comprimé, qui communique par un conduit (33) d'évacuation avec une sortie (36) d'évacuation ;
le dispositif (40) de commande est conformé pour purger le conduit (16) pour de l'air comprimé par la sortie (30) d'évacuation, si le compresseur (14) d'air est arrêté,
et le dispositif (10) de préparation d'air comprimé a, entre le dispositif (32) de préfiltration et le dispositif (22) de séchage de l'air, un clapet antiretour (38) dans le conduit (16) pour de l'air comprimé en aval du dispositif (32) de préfiltration.

2. Dispositif de préparation d'air comprimé suivant la revendication 1, dans lequel
il est prévu, pour un fonctionnement en régénération du dispositif (22) de séchage de l'air, une sortie (30) de purge, qui, par un conduit (27) de purge, communique avec le conduit (16) pour de l'air comprimé en amont du dispositif (22) de séchage de l'air ; et
le dispositif (40) de commande est conformé pour purger le conduit (16) pour de l'air comprimé par la sortie (30) de purge, si le compresseur (14) d'air est arrêté.

3. Dispositif de préparation d'air comprimé suivant la revendication 2, dans lequel
il est prévu un dispositif (28) de soupape de sortie dans le conduit (27) de purge et
l'unité (40) de commande est conformée pour mettre à l'état ouvert le dispositif (28) de soupape de sortie, si le compresseur (14) d'air est arrêté.

4. Dispositif de préparation d'air comprimé suivant la revendication 2 ou 2, dans lequel
il est prévu un dispositif (26) de soupape d'entrée dans le conduit (16) pour de l'air comprimé en amont du dispositif (22) de séchage de l'air ; et
le dispositif (40) de commande est conformé pour mettre à l'état ouvert le dispositif (26) de soupape d'entrée, si le compresseur (14) d'air est arrêté.

5. Dispositif de préparation d'air comprimé suivant l'une des revendications 1 à 4, dans lequel
il est prévu un dispositif (34) de soupape d'évacuation dans le conduit (33) d'évacuation du dispositif (32) de préfiltration ; et
le dispositif (40) de commande est conformé pour mettre à l'état ouvert le dispositif (34) de soupape d'évacuation, si le compresseur (14) d'air est arrêté.

6. Dispositif de préparation d'air comprimé suivant l'une des revendications précédentes, qui a en outre un clapet antiretour (24) dans le conduit (16) pour l'air comprimé en aval du dispositif (22) de séchage de l'air.

7. Dispositif d'alimentation en air comprimé comportant :
un dispositif (10) de préparation d'air comprimé suivant l'une des revendications précédentes ; et
un compresseur (14) d'air, qui est raccordé à l'entrée (12) d'air comprimé du dispositif (10) de préparation d'air comprimé ou qui peut l'être.

8. Procédé pour faire fonctionner un dispositif de préparation d'air comprimé, notamment pour des véhicules ferroviaires ou des véhicules utilitaires, dans lequel le dispositif (10) de préparation d'air comprimé a une entrée (12) d'air comprimé à laquelle peut être raccordé un compresseur d'air, une sortie (18) d'air comprimé qui communique avec l'entrée d'air comprimé par un conduit (16) pour de l'air comprimé et un dispositif (22) de séchage de l'air monté dans le conduit (16) pour de l'air comprimé dans lequel
le dispositif (10) de traitement d'air comprimé a, en amont du dispositif (22) de séchage de l'air, un dispositif (32) de préfiltration dans le conduit (16) pour de l'air comprimé, qui communique par un conduit (33) d'évacuation avec une sortie (26) d'évacuation et on purge le conduit (16) pour de l'air comprimé en amont du dispositif (22) de séchage de l'air par la sortie (36) d'évacuation, si on arrête le compresseur (24) d'air, et
un clapet anti-retour (38) dans le conduit (16) pour de l'air comprimé en aval du dispositif (32) de filtration entre le dispositif (32) de préfiltration et le dispositif (22) de séchage de l'air empêche un courant de retour de l'air comprimé d'un système d'air comprimé raccordé au dispositif (10) de préparation d'air comprimé, si on arrête le compresseur (14) d'air.

9. Procédé suivant la revendication 8, dans lequel on continue à purger d'abord le conduit (16) pour de l'air comprimé en amont du dispositif (22) de séchage de l'air, si on remet en fonctionnement le compresseur (14) d'air.

10. Procédé suivant la revendication 8 ou 9, dans lequel
le dispositif (10) de préparation d'air comprimé a, pour un fonctionnement en régénération du dispositif (22) de séchage de l'air, une sortie (30) de purge, qui communique par un conduit (27) de purge avec le conduit (16) pour de l'air comprimé en amont du dispositif (22) de séchage de l'air ; et
on purge le conduit (16) pour de l'air comprimé par la sortie (30) de purge, si on arrête le compresseur (14) d'air,

11. Procédé suivant la revendication 10, dans lequel
le dispositif (10) de préparation d'air comprimé a un dispositif (28) de soupape de sortie dans le conduit (27) de purge ; et
on ouvre le dispositif (28) de soupape de sortie, si on arrête le compresseur (14) d'air.

12. Procédé suivant la revendication 10 ou 11, dans lequel
le dispositif (10) de traitement d'air comprimé a en outre un dispositif (26) de soupape d'entrée dans le conduit (16) pour de l'air comprimé en amont du dispositif (22) de séchage de l'air ; et
on ouvre le dispositif (26) de soupape d'entrée, si on arrête le compresseur (14) d'air.

13. Procédé suivant l'une des revendications 8 à 12, dans lequel
le dispositif (10) de traitement d'air comprimé a en outre un dispositif (34) de soupape de sortie dans le conduit (33) de sortie du dispositif (32) de préfiltration ; et
on ouvre le dispositif (34) de soupape de sortie, si on arrête le compresseur (14) d'air.
